# FASCICULE DE BREVET EUROPEEN

(11) **EP 1 583 275 B1**
(45) Date de publication et mention de la délivrance du brevet: **27.08.2008**
(21) Numéro de dépôt: 05290671.6
(22) Date de dépôt: 25.03.2005
(51) Int. Cl.: H04L 1/18, H04Q 7/30

(54) **Gestion de taille de mémoire virtuelle pour la transmission de blocs de bits de données dans un canal descendant de type HS-DSCH d'un réseau de communications mobile**
Verwaltung der Speichergrösse für die Übertragung von Datenbitblöcken in einem HS-DSCH downlink Kanal in einem mobilen Kommunikationsnetz
Management of virtual memory size for the transmission of data bit blocks in a HS-DSCH downlink channel in a mobile communication network

(30) Priorité: 31.03.2004 FR 0450629
(43) Date de publication de la demande: 05.10.2005
(73) Titulaire: Alcatel Lucent, 75008 Paris (FR)
(72) Inventeur: Agin, Pascal, 92320 Chatillon (FR); Stefanini, Rémi, 75014 Paris (FR)
(74) Mandataire: El Manouni, Josiane

(56) Documents cités:
- EP-A- 1 389 848
- US-A1- 2003 123 409
- US-A1- 2003 133 497
- US-B1- 6 624 767

## Description

L'invention concerne le domaine des réseaux de communications mobile, et plus précisément la gestion de la taille de la mémoire virtuelle nécessaire à la transmission de blocs de bits de données dans les canaux de transport de type HS-DSCH de tels réseaux.

Comme le sait l'homme de l'art, il a été proposé dans la cinquième version des spécifications 3GPP, régissant la transmission de données multimédia dans les réseaux de communications mobiles (ou cellulaires), comme par exemple les réseaux GSM/GPRS, UMTS ou EDGE, un mécanisme d'accès à haute vitesse à des paquets descendants (ou HSDPA pour « High Speed Downlink Packet Access »). Ce mécanisme a notamment pour but de permettre un haut débit de transmission des trafics descendants de paquets, comme par exemple les trafics Internet, quasiment insensible au retard de transmission. Il repose sur l'utilisation de canaux de transport descendants à haute vitesse, appelés HS-DSCH (pour « High Speed - Downlink Shared Channel ») et partagés par plusieurs équipements d'utilisateurs.

Il est rappelé qu'un canal de transport HS-DSCH est situé entre la couche MAC et la couche physique. Il est également rappelé que les bits de données provenant du canal de transport HS-DSCH sont transmis à un équipement d'utilisateur dans un ensemble d'au moins un canal physique, appelé HS-PDSCH et se situant au niveau de la couche physique.

On entend ici par « équipement d'utilisateur » tout terminal de communication capable d'échanger des données par voie d'ondes avec un réseau de communications mobile (ou cellulaire).

L'obtention de hauts débits repose notamment sur la mise en oeuvre, au moyen d'un système d'organisation de débit de transmission de bits, implanté dans chaque station de base, d'une technique hybride automatisée de répétition de requêtes, plus connue sous l'acronyme anglais HARQ (pour « Hybrid Automatic Repeat reQuest »). Cette technique consiste, chaque fois qu'un équipement d'utilisateur reçoit de la station de base dont il dépend, sur un canal de transport HS-DSCH, un bloc de données incorrect, à transmettre à cette station de base un message de mauvaise réception, appelé « NACK » (abréviation anglaise de « Non Acknowledgment »), de sorte qu'elle lui retransmette un nouveau bloc de bits de données dans le canal de transport HS-DSCH. A réception de ce nouveau bloc, l'équipement d'utilisateur recombine les données qu'il contient à celles contenues dans le(s) bloc(s) précédemment reçu(s) de façon incorrecte, qu'il avait temporairement stockées dans une mémoire tampon dédiée.

Afin de permettre la retransmission des bits de données du canal de transport HS- DSCH sur un ensemble d'un ou plusieurs canaux physiques HS-PDSCH, le système d'organisation de débit comporte une mémoire tampon virtuelle, « implantée » entre deux étages d'organisation de débit de bits, et chargée de stocker des bits de données (intermédiaires) d'un bloc à transmettre à un équipement d'utilisateur tant que la station de base n'a pas reçu de l'équipement un accusé de réception, appelé « ACK » (abréviation anglaise de « Acknowledgment »), signalant qu'il a correctement reçu le bloc.

Pour une description d'une telle organisation, on peut se référer par exemple au document US 2003/133497. Par ailleurs, le document US 6624767 décrit une structure de mémoire tampon pouvant être utilisée pour stocker des symboles reçus pour un ou plusieurs canaux de transport reçus via un ou plusieurs canaux physiques, dans un système CDMA.

Le premier étage est chargé d'adapter le nombre de bits d'entrée, qui lui parviennent du canal de transport HS-DSCH, au nombre de bits intermédiaires que peut contenir la mémoire virtuelle.

Le second étage est chargé d'adapter le nombre de bits intermédiaires, stockés dans la mémoire virtuelle, au nombre maximal de bits de sortie qui peuvent être transmis sur l'ensemble des N canaux physiques HS-PDCH, associés au canal de transport HS-DSCH, dans un intervalle de temps donné (appelé TTl). Dans le cas de la norme UMTS actuelle, N appartient à l'intervalle [1;15].

Plus précisement, chaque fois qu'un bloc de bits doit être retransmis à un équipement, le second étage utilise les bits intermédiaires stockés dans la mémoire virtuelle pour constituer une version redondante du bloc initial, comportant soit le même jeu de données que le jeu du bloc initial (mode de retransmission appelé « combinaison de poursuite » (ou en anglais CC pour « Chase Combining »)), soit un jeu de données différent du jeu du bloc initial (mode de retransmission appelé « redondance incrémentale » (ou en anglais IR pour « Incremental Redundancy »)).

En raison de ce mode de fonctionnement, la taille de la mémoire nécessaire à une station de base dépend pour une bonne partie de la taille de la mémoire virtuelle. Il est donc important que la taille de la mémoire virtuelle soit la plus petite possible. Cependant, plus cette taille est petite, plus le premier étage d'organisation de débit doit supprimer (ou « puncture ») de bits d'entrée pour qu'ils puissent être stockés dans la mémoire virtuelle. Or, comme le sait l'homme de l'art, plus on supprime de bits d'entrée, moins les performances du système d'organisation de débit sont bonnes, et donc plus il faut de retransmissions pour qu'un équipement reçoive correctement un bloc de bits de données.

L'invention a pour objet d'optimiser le choix de la taille de la mémoire virtuelle qui est utilisée par une station de base pour organiser les débits de bits du canal de transport HS-DSCH qui doivent être (re)transmis aux équipements d'utilisateurs sur l'ensemble des canaux physiques HS-PDSCH descendants qui les relient.

Elle propose à cet effet un dispositif de gestion de la taille de la mémoire virtuelle d'un système d'organisation de débit, fournissant un nombre de bits intermédiaires, que peut contenir la mémoire virtuelle, choisi de sorte que le premier étage puisse adapter le nombre de bits d'entrée au nombre de bits intermédiaires, et que le second étage puisse adapter le nombre de bits intermédiaires au nombre de bits de sortie qui peuvent être transmis par l'ensemble des N canaux physiques HS-PDSCH associés au canal de transport HS-DSCH, sans ajout de bits.

Préférentiellement, le dispositif fournit un nombre de bits intermédiaires au moins égal à une valeur minimale égale au nombre maximal de bits pouvant être transmis par l'ensemble des N canaux physiques HS-PDSCH dans un intervalle de temps donné (TTI).

Plus préférentiellement encore, le dispositif fournit un nombre de bits intermédiaires au moins égal à une autre valeur strictement supérieure à la valeur minimale. Cette autre valeur peut être égale au nombre de bits d'entrée provenant du canal de transport HS-DSCH à l'entrée du premier étage. Ainsi, le premier étage est transparent. Dans le cas de la norme UMTS actuelle, le nombre de bits d'entrée est égal à la somme du résultat de la multiplication par six du débit de bits d'informations utiles (en kilobits par seconde (kbps)) que peut recevoir l'équipement et d'une constante choisie, de préférence égale à 84.

Un tel dispositif peut être agencé de manière à déterminer lui-même le nombre de bits intermédiaires qu'il doit fournir. Mais, en variante, il peut également fournir un nombre de bits intermédiaires fixé.

L'invention propose également un système d'organisation de débit dans un ensemble d'au moins un canal physique HS-PDSCH associé à un canal de transport descendant HS-DSCH et établi entre une station de base d'un réseau de communications et au moins un équipement d'utilisateur, pourvu d'un dispositif de gestion du type de celui présenté ci-avant. Ainsi, le système peut adapter de façon dynamique la taille de sa mémoire virtuelle en fonction des besoins.

L'invention propose en outre un système de codage de canal, pour un réseau de communications, comprenant un système d'organisation de débit de bits de données du type de celui présenté ci-dessus. L'invention propose également un système de codage de canal, pour un réseau de communications, comprenant un dispositif de gestion du type de celui présenté ci-avant.

L'invention est particulièrement bien adaptée, bien que de façon non exclusive, au domaine des communications radio 3GPP, et notamment aux réseaux de type W-CDMA, CDMA 2000, IS95, UMTS, GSM/GPRS et EDGE.

D'autres caractéristiques et avantages de l'invention apparaîtront à l'examen de la description détaillée ci-après, et des dessins annexés, sur lesquels :
- la figure 1 illustre de façon schématique un exemple de réalisation d'une partie d'un réseau de communications de type UMTS comprenant des stations de base (Node Bs) munies d'un dispositif de gestion selon l'invention,
- la figure 2 illustre de façon schématique et fonctionnelle un exemple de réalisation d'un système de codage de canal de transport, et
- la figure 3 illustre de façon schématique et fonctionnelle un exemple de réalisation d'un système d'organisation de débit équipé d'un dispositif de gestion selon l'invention, pour le système de codage de canal de transport de la figure 2.

Les dessins annexés pourront non seulement servir à compléter l'invention, mais aussi contribuer à sa définition, le cas échéant.

L'invention a pour objet de permettre l'optimisation du choix de la taille de la mémoire tampon virtuelle utilisée par un système d'organisation de débit d'un système de codage de canal de transport d'une station de base d'un réseau de communications mobile.

L'invention concerne tout type de réseau de communications mobile dans lequel des liaisons descendantes de type HS-DSCH, associées à un ensemble d'un ou plusieurs canaux physiques de type HS-PDSCH et telles que définies dans la version 5 des spécifications 3GPP (accessibles sur le site du 3GPP à l'adresse http://www.3GPP.org), peuvent être établies entre une station de base et au moins un équipement d'utilisateur. Elle s'applique par conséquent aux communications radio (ou mobiles) 3GPP, et notamment aux réseaux de type W-CDMA, CDMA 2000, IS95, UMTS, GSM/GPRS et EDGE. Dans ce qui suit, on considère à titre d'exemple que le réseau est de type UMTS.

Par ailleurs, on entend par « équipement d'utilisateur » tout terminal de communication capable d'échanger des données par voie d'ondes, sous la forme de signaux, avec un autre équipement d'utilisateur ou un équipement de son réseau de rattachement, comme par exemple une station de base. Il pourra donc s'agir, par exemple, d'un téléphone portable, ou d'un assistant personnel numérique (ou PDA) ou d'un ordinateur portable équipé d'un dispositif de communication radio.

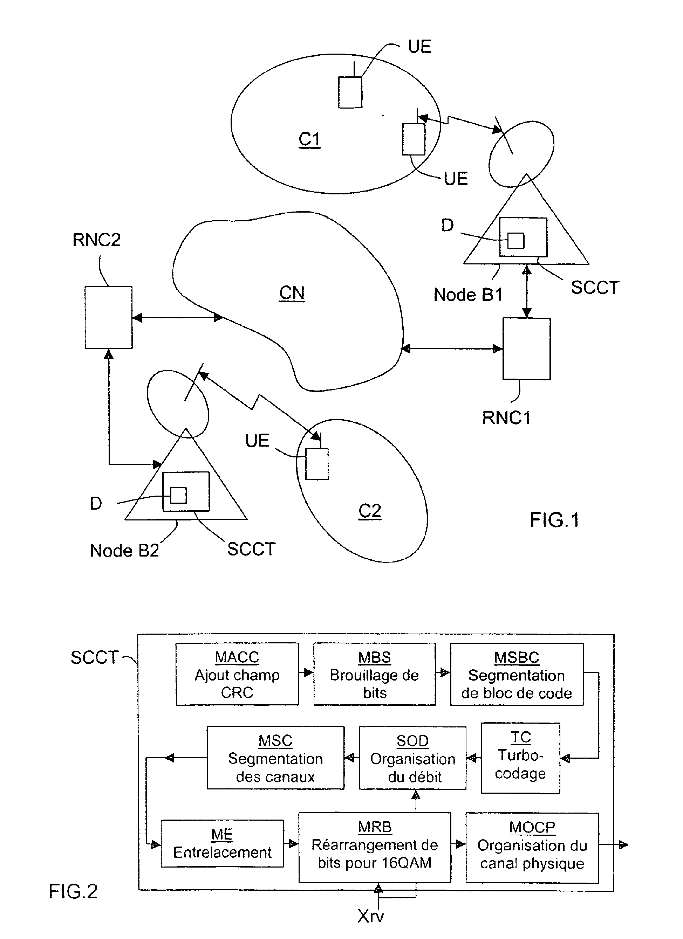

On se réfère tout d'abord à la figure 1 pour décrire un réseau de communications mobile (ici de type UMTS) permettant de mettre en oeuvre l'invention.

Un réseau UMTS peut, d'une façon très schématique mais néanmoins suffisante à la compréhension de l'invention, être résumé à un coeur de réseau (ou « Core Network » (CN)) couplé à un réseau d'accès radio comportant une ou plusieurs stations de base appelées Node Bs et raccordées au Core Network CN par un ou plusieurs noeuds RNC (ou « Radio Network Controller »). Dans l'exemple illustré, le réseau UMTS comprend deux stations de base Node B1 et Node B2 respectivement raccordées au Core Network CN par des noeuds RNC1 et RNC2. Par ailleurs, dans cet exemple chaque station de base Node B1, Node B2 est associée à une unique cellule C1, C2 couvrant une zone radio dans laquelle peuvent se trouver un ou plusieurs équipements d'utilisateurs UE.

Chaque Node Bi (ici i=1, 2) est chargé du traitement du signal et, notamment, de la gestion des demandes d'accès au réseau UMTS effectuées par les équipements d'utilisateurs UE qui sont situés dans la cellule Ci qu'il contrôle, ainsi que de la gestion des canaux de transport de type HS-DSCH qu'il a établis avec des équipements d'utilisateurs UE qui sont situés dans sa cellule Ci.

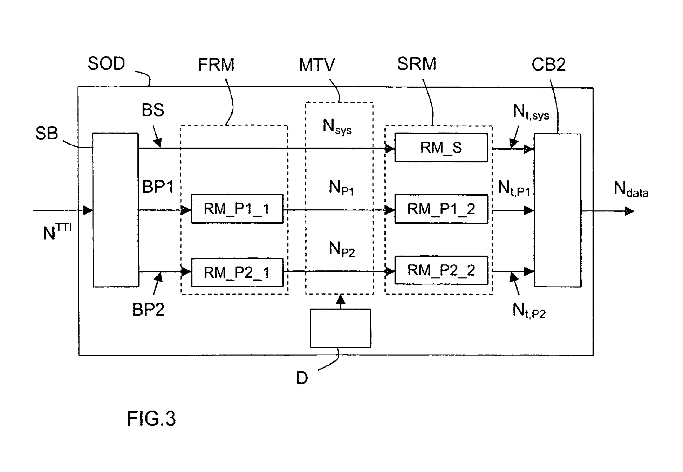

Afin de gérer les canaux de transport HS-DSCH, chaque Node Bi comprend un système de codage de canal de transport SCCT, du type de celui illustré schématiquement, et à titre d'exemple, sur la figure 2. Un tel système SCCT étant bien connu de l'homme de l'art et ne faisant pas l'objet principal de l'invention, il ne sera donc pas décrit ici en détail. Il est simplement rappelé qu'il est généralement constitué :
- d'un module MACC d'ajout de champ de contrôle de redondance cyclique (ou CRC pour « Cyclic Redundancy Check »), chargé d'adjoindre aux données délivrées par le module de concaténation CC un champ CRC utilisé par l'équipement d'utilisateur UE, destinataire des données, pour qu'il puisse détecter des erreurs de transmission de données,
- d'un module MBS de brouillage de bits (ou « bit scrambling ») chargé de rendre les bits de données délivrés par le module MACC pseudo aléatoires, afin d'atteindre les meilleures performances dans le module de turbo codage (TC), performances qui pourraient être dégradées pour certaines séquences de bits particulières,
- d'un module de segmentation de blocs de code MSBC chargé de segmenter les blocs de données délivrés par le module MBS en blocs plus petits, de manière à délivrer des blocs de taille inférieure à la taille maximale supportée par le codeur de canal, laquelle est définie par la norme 3GPP TS 25.212,
- d'un module de turbo-codage (ou turbo-codeur) TC chargé de coder les bits de données délivrés par le module de segmentation de blocs de code MSBC, afin de délivrer des flux de bits codés N^{TTI} de types dits « systématique », « de parité 1 » et « de parité 2 », ci-après appelés bits d'entrée,
- d'un système d'organisation de débit SOD chargé d'organiser les débits respectifs des différents types de bits d'entrée (systématiques et de parité 1 et 2) délivrés par le turbo-codeur TC, et de délivrer des bits dits « de sortie », et sur lequel on reviendra plus loin en référence à la figure 3,
- d'un module de segmentation de canaux physiques MSC chargé de segmenter (ou séparer) les bits de sortie délivrés par le système d'organisation de débit SOD et transportés par le canal de transport HS-DSCH, de sorte qu'ils puissent être répartis dans les différents canaux physiques HS-PDSCH qu'ils doivent emprunter,
- un module d'entrelacement ME chargé d'entrelacer les bits délivrés par le module de segmentation de canaux physiques MSC, en les mélangeant, de manière à améliorer les performances du codage correcteur d'erreur (TC) vis à vis du canal radio,
- éventuellement d'un module de réarrangement de bits MRB, chargé de réarranger les bits de données délivrés par le module d'entrelacement ME, lorsque la modulation est de type 16QAM, et
- d'un module d'organisation de canaux physiques MOCP chargé d'alimenter le ou les N canaux physiques HS-PDSCH avec les bits délivrés par le module d'entrelacement ME ou le module de réarrangement de bits MRB.

Il est rappelé que le nombre maximal de bits de sortie, pouvant être transmis dans les N (N>0) canaux physiques HS-PDSCH associés à un canal de transport HS-DSCH, dans un intervalle de temps donné ou TTI ( pour « Time Transmission Interval »), varie en fonction du type de modulation choisi. Dans le cas d'une modulation de type QPSK, le nombre de bits maximal est égal à N × 960, tandis que dans le cas d'une modulation de type 16QAM, il est égal à N × 1920, pour chaque intervalle de transmission temporel TTI constitué de trois tranches (ou « slots ») d'une durée totale de 2 ms (ce qui correspond à un bloc transmis toutes les 2 ms). N représente ici le nombre de canaux physiques HS-PDSCH, et donc de codes (un code par canal physique), utilisés pour le transport des blocs de bits de données d'un canal de transport HS-DSCH.

On va maintenant décrire en détail le système d'organisation de débit SOD selon l'invention, en référence à la figure 3.

Le système d'organisation de débit SOD est chargé du choix des bits de données qui doivent être retransmis de façon prioritaire dans un ou plusieurs canaux physiques HS-PDSCH (associés à un canal de transport HS-DSCH) par un Node B, sous la forme d'un bloc, à un équipement d'utilisateur UE qui lui a signalé par un message de type NACK qu'il n'a pas reçu correctement un premier bloc (précédent), conformément à la technique hybride automatisée de répétition de requêtes, connue sous l'acronyme anglais HARQ (pour « Hybrid Automatic Repeat reQuest »).

Comme indiqué dans la partie introductive, le système d'organisation de débit SOD peut fonctionner soit en mode de retransmission dit de combinaison de poursuite (ou en anglais CC, pour Chase Combining), soit en mode de retransmission dit de redondance incrémentale (ou en anglais IR, pour Incremental Redundancy).

Il est rappelé que dans le mode CC chaque bloc à retransmettre, délivré par le système d'organisation de débit SOD, comporte un jeu de bits de données identique au jeu du (premier) bloc initialement transmis, tandis qu'en mode IR chaque bloc à retransmettre, délivré par le système d'organisation de débit SOD, comporte un jeu de bits de données qui diffère au moins en partie du jeu de bits de données du bloc qui le précède. Par ailleurs, il est également rappelé que la retransmission d'un bloc est déclenchée dans le cadre de la procédure HARQ chaque fois qu'un équipement d'utilisateur UE n'a pas reçu correctement un premier bloc.

Le mode de transmission IR est avantageux car il permet d'utiliser à chaque nouvelle retransmission, d'autres bits que ceux précédemment transmis. Dans ce mode de transmission, le décodage d'un bloc au niveau de l'équipement d'utilisateur UE destinataire s'effectue par combinaison des contenus de ses différentes versions, transmises successivement par le Node B auquel il est momentanément rattaché, et stockées temporairement dans une mémoire tampon.

Le système d'organisation de débit SOD comporte tout d'abord, comme illustré sur la figure 3, un module de séparation de bits SB alimenté en flux de bits d'entrée N^{TTI} par le turbo-codeur TC. Ce module de séparation de bits SB est chargé de séparer les différents types de bits d'entrée (systématiques (BS), de parité 1 (BP1) et de parité 2 (BP2)) afin qu'ils soient traités séparément par un premier étage d'organisation de débit FRM.

Le premier étage d'organisation de débit FRM est chargé d'adapter le nombre de bits d'entrée N^{TTI}, délivrés par le turbo-codeur TC, au nombre de bits dits « intermédiaires » que peut contenir une mémoire virtuelle d'incrément de redondance (ou « virtual IR buffer ») MTV, objet de l'invention.

A cet effet, le premier étage d'organisation de débit FRM comporte deux modules d'organisation RM_P1_1 et RM_P2_1 chargés respectivement de traiter les bits de parité 1 BP1 et les bits de parité 2 BP2 afin de délivrer sur leurs sorties des flux de bits de parité 1 N_{P1} et de bits de parité 2 N_{P2}.

Le nombre de bits d'entrée N^{TTI} étant généralement supérieur au nombre de bits intermédiaires que peut contenir la mémoire virtuelle MTV, les modules d'organisation RM_P1_1 et RM_P2_1 sont chargés de supprimer (ou « puncture ») une partie d'entre eux. Cette technique de suppression de bits (ou « puncturing ») est définie par la norme 3GPP TS 25.212, version 5.3.0.

Les bits systématiques ne font pas l'objet d'un traitement par suppression au sein du premier étage d'organisation de débit FRM, mais sont directement délivrés sur une troisième sortie, sous la forme de flux de bits systématiques N_{sys}.

Les trois flux Nsys, N_{P1} et N_{P2} alimentent la mémoire tampon virtuelle MTV. La taille de cette mémoire MTV dépend du nombre de bits (intermédiaires) qui doivent être conservés dans le Node B tant que l'équipement d'utilisateur UE destinataire n'a pas reçu correctement un premier bloc et donc tant qu'il n'a pas adressé audit Node B un message d'accusé de réception ACK, conformément à la technique HARQ.

Le système d'organisation de débit SOD comporte également un second étage d'organisation de débit SRM chargé de définir pour chaque (re)transmission le débit prioritaire de chaque type de flux en fonction de la valeur d'un paramètre de redondance appelé X_{RV} et d'adapter le nombre de bits intermédiaires, stockés dans la mémoire virtuelle MTV, au nombre maximal de bits dits « de sortie » qui peuvent être transmis par les N canaux physiques HS-PDSCH associés à un canal de transport HS-DSCH.

Il comprend à cet effet trois modules d'organisation RM_S, RM_P1_2 et RM_P2_2 chargés de traiter respectivement les bits systématiques N_{sys}, les bits de parité 1 N_{P1} et les bits de parité 2 N_{P2} afin de délivrer sur leurs sorties des flux de bits systématiques N_{t,sys}, de bits de parité 1 N_{t,P1} et de bits de parité 2 N_{t,P2} qui alimentent un collecteur de bits CB2 délivrant sur une sortie un flux de bits de sortie N_{data}, regroupant les différents flux sélectionnés et alimentant le module de segmentation de canaux physiques MSC.

Selon le nombre maximal de bits de sortie qui peuvent être transmis par les N canaux physiques HS-PDSCH associés à un canal de transport HS-DSCH, les modules d'organisation RM_S, RM_P1_2 et RM_P2_2 effectuent soit une nouvelle suppression (ou puncturing) de bits intermédiaires, soit un ajout de bits, par répétition.

Chaque fois que le Node B reçoit un message NACK d'un équipement d'utilisateur UE, le second étage d'organisation de débit SRM, de son système d'organisation de débit SOD, détermine un jeu de bits de sortie, pour le bloc à retransmettre, à partir des bits intermédiaires stockés dans la mémoire MTV. Ce jeu est alors identique à celui précédemment (re)transmis, en présence d'un mode de transmission CC, ou différent de celui précédemment (re)transmis, en présence d'un mode de transmission IR.

Comme indiqué dans la partie introductive, plus la taille de la mémoire virtuelle MTV est grande, moins le système d'organisation de débit SOD doit supprimer de bits d'entrée pour adapter leur nombre à la capacité de ladite mémoire virtuelle MTV, et donc meilleures sont les performances du système d'organisation de débit SOD. En effet, plus on supprime de bits d'entrée, plus il faut statistiquement de retransmissions pour qu'un équipement d'utilisateur puisse recevoir correctement un bloc de bits de données. Mais, plus la taille de la mémoire virtuelle MTV est grande, plus la mémoire du Node B doit être importante, ce qui est pénalisant, notamment en terme de coût.

L'invention a donc pour objet d'optimiser le choix de la taille de la mémoire virtuelle MTV de manière à ne pas pénaliser le Node B dans lequel elle est implantée.

L'invention porte sur le choix du nombre de bits intermédiaires qui peuvent être stockés dans la mémoire virtuelle MTV. Plus précisément, l'invention consiste à choisir la taille de la mémoire virtuelle MTV de sorte qu'elle permette, d'une part, au premier étage d'organisation de débit FRM d'adapter le nombre de bits d'entrée au nombre de bits intermédiaires par suppression (ou puncturing) de bits, et d'autre part, au second étage d'organisation de débit SRM d'adapter le nombre de bits intermédiaires au nombre de bits de sortie sans ajout de bits.

Une taille minimale de mémoire virtuelle MTV peut être définie. Il s'agit de la taille en deçà de laquelle il ne devient plus possible de fonctionner en mode de redondance incrémentale (IR), du fait que les performances du système d'organisation de débit SOD deviennent trop dégradées. En d'autres termes, la taille minimale de la mémoire virtuelle MTV est celle qui minimise la taille de la mémoire du Node B tout en assurant des performances acceptables.

Préférentiellement, la taille minimale Sₘᵢₙ de la mémoire virtuelle MTV est définie par un nombre de bits égal au nombre maximal de bits nₘₐₓ qui peuvent être transmis par le ou les canaux physiques HS-PDSCH. Ce nombre maximal de bits nₘₐₓ est donné par la relation nₘₐₓ = N × n_{max/code}, où N est le nombre de canaux physiques HS-PDSCH (et donc le nombre de codes) utilisés pour le transport d'un bloc de transport et n_{max/code} est le nombre maximal de bits pouvant être transmis dans un canal physique HS-PDSCH pendant un intervalle TTI.

Par exemple, en présence d'une modulation de type QPSK n_{max/code} est égal à 960 bits par TTI, tandis qu'en présence d'une modulation de type 16QAM n_{max/code} est égal à 1920 bits par TTI.

Pour la norme UMTS actuelle, le nombre N de codes HS-PDSCH est généralement compris entre les valeurs 1 et 15. Il dépend de la valeur choisie d'un paramètre de qualité, appelé indicateur de qualité de canal (ou CQI pour « Channel Quality Indicator »), lequel est défini par la norme 3GPP TS 25.214 et dans le tableau ci-dessous. Mais, il est important de noter que le nombre de codes utilisés par le réseau n'est pas forcément lié au paramètre de qualité CQI.

Un exemple de schéma de codage de bits, en fonction de différentes valeurs du paramètre CQI et en présence d'une modulation QPSK, est donné dans le tableau ci-dessous. Ce schéma est adapté à la norme UMTS et concerne les classes de téléphones mobiles n°1 à 10. D'autres schémas, plus complets, et concernant notamment la modulation 16QAM, sont définis par la norme 3GPP TS 25.214.

| CQI | Taille du bloc de transport (en bits) | Débit maximal utile (R en kbps) | Nombre de codes HS-PDSCH (N) |
|---|---|---|---|
| 1 | 137 | 68,5 | 1 |
| 2 | 173 | 86,5 | 1 |
| 3 | 233 | 116,5 | 1 |
| 4 | 317 | 158,5 | 1 |
| 5 | 377 | 188,5 | 1 |
| 6 | 461 | 230,5 | 1 |
| 7 | 650 | 325 | 2 |
| 8 | 792 | 396 | 2 |
| 9 | 931 | 465,5 | 2 |
| 10 | 1262 | 631 | 3 |
| 11 | 1483 | 741,5 | 3 |
| 12 | 1742 | 871 | 3 |
| 13 | 2279 | 1139,5 | 4 |
| 14 | 2583 | 1291,5 | 4 |
| 15 | 3319 | 1659,5 | 5 |

Le débit maximal utile R est le débit de bits maximal qui peut être reçu par un équipement d'utilisateur UE au niveau de la couche physique (dans le système OSI). Ce débit R inclut notamment les entêtes des protocoles des couches supérieures à la couche physique, comme par exemple les couches MAC et RLC, mais il n'inclut pas les champs de la couche physique, comme par exemple le champ CRC.

Ce débit maximal utile R peut être utilisé pour définir une valeur optimale Sₒₚₜ de taille de mémoire virtuelle MTV, supérieure à la valeur minimale Sₘᵢₙ, qu'il est avantageux d'utiliser lorsque cela s'avère possible.

Cette valeur optimale Sₒₚₜ correspond à la taille au-delà de laquelle l'amélioration des performances du système d'organisation de débit SOD n'est plus sensible.

Cette valeur optimale Sₒₚₜ est préférentiellement celle qui permet au premier étage d'organisation de débit FRM de ne pas supprimer de bits d'entrée (et donc d'être transparent), et par conséquent de permettre la génération du plus grand nombre de versions de jeux de bits de données. Elle est donc égale à N_{TTI}.

Dans le cas de la norme UMTS actuelle, la valeur optimale Sₒₚₜ peut être définie à partir d'une relation ayant le débit maximal utile R (en kbps) comme variable : Sₒₚₜ = 3 × ((2 × R) + 24 + 4), soit encore Sₒₚₜ = 6R + 84.

Dans cette relation, d'une première part, le terme (2 × R) transforme le débit maximal utile R (en kbps) en une longueur de bloc nécessaire à l'obtention dudit débit, compte tenu du fait qu'un bloc est émis toutes les 2 ms, d'une deuxième part, le nombre 24 est la longueur du champ CRC, et d'une troisième part, le terme ((y + 4) × 3), où y représente l'expression ((2 × R) + 24), correspond au nombre de bits d'entrée délivrés par le turbo-codeur TC lorsque y est le nombre de bits à l'entrée dudit turbo-codeur TC. Tous les autres traitements effectués par les modules MBS, MSBC, MSC, ME, MRB et MOCP ne changent pas le nombre de bits à transmettre.

Par exemple, en présence d'une modulation QPSK, d'un nombre N de codes HS-PDSCH égal à 5, d'une valeur de CQI égale à 15, d'un nombre de bits d'information (ou taille de bloc) égal à 3319 (hors champ CRC), et d'un débit maximal utile R égal à 1659,5 kbps, la valeur optimale Sₒₚₜ est égale à 10041 bits, tandis que la valeur minimale Sₘᵢₙ est égale à 4800 bits.

Dans cet exemple, la mémoire virtuelle MTV doit pouvoir contenir au moins 4800 bits (Sₘᵢₙ), et de préférence un nombre de bits compris entre 4800 et au moins 10041 (Sₒₚₜ), et si possible un nombre de bits au moins égal à 10041 (Sₒₚₜ).

Si le nombre de bits d'information à l'entrée du turbo-codeur TC est égal à 3343 (3319 + 24 (champ CRC)), alors le nombre de bits d'entrée, provenant du canal de transport HS-DSCH, est égal à 10041 à l'entrée du système d'organisation de débit SOD. Par conséquent, si la taille de la mémoire virtuelle MTV est égale à 4800 (Sₘᵢₙ), et que le nombre maximal de bits nₘₐₓ pouvant être transmis par les N canaux physiques HS-PDSCH, associés au canal de transport HS-DSCH, est également égal à 4800, alors le premier étage d'organisation de débit FRM doit supprimer 5241 bits (10041 - 4800) pour adapter le nombre de bits d'entrée à la taille de la mémoire virtuelle MTV. Cette suppression de 5241 bits est destinée à réduire la redondance du codage correcteur d'erreur (TC). En revanche, le second étage d'organisation de débit SRM n'a pas besoin d'adapter le nombre de bits intermédiaires (stockés dans MTV) au nombre de bits de sortie égal à 4800. Mais, si la taille de la mémoire virtuelle MTV est égale à 10041 (Sₒₚₜ), et que le nombre maximal de bits nₘₐₓ pouvant être transmis par les N canaux physiques HS-PDSCH, associés au canal de transport HS-DSCH, est égal à 4800, alors le premier étage d'organisation de débit FRM n'a pas besoin d'adapter le nombre de bits d'entrée à la taille de la mémoire virtuelle MTV. C'est le second étage d'organisation de débit SRM qui est ici chargé de supprimer 5241 bits intermédiaires (10041 - 4800) pour adapter leur nombre au nombre de bits de sortie pouvant être transmis par les N canaux physiques HS-PDSCH, associés au canal de transport HS-DSCH. Cette suppression effectuée par le second étage d'organisation de débit SRM affecte moins les performances car ce ne sont pas forcément les mêmes bits de redondance qui sont supprimés lors de chaque retransmission (du fait du changement de la valeur du paramètre Xrv). Lorsque la suppression de bits s'opère au niveau du premier étage d'organisation de débit FRM, le même jeu de données est transmis lors de chaque retransmission, quelle que soit la valeur du paramètre Xrv, car le second étage d'organisation de débit SRM est transparent, si bien que les performances sont affectées.

L'invention peut être mise en oeuvre dans un système d'organisation de débit SOD soit de façon statique, soit de façon dynamique.

Dans le cas d'une mise en oeuvre statique, la taille de la mémoire virtuelle MTV est préconfigurée, soit par une action d'un technicien au niveau du Node B concerné, par exemple à l'aide d'un terminal local, soit par des instructions transmises au Node B par le réseau, par exemple via le contrôleur de réseau radio (ou RNC) ou l'OMC, soit encore avant installation (dans ce cas elle peut se faire par exemple par codage dans le logiciel ou le matériel).

Dans le cas d'une mise en oeuvre dynamique, la taille de la mémoire virtuelle MTV est adaptable en fonction des besoins, par exemple à l'aide d'un dispositif de gestion de taille de mémoire D. Ce dispositif D peut être soit implanté dans le Node B, par exemple dans le système d'organisation de débit SOD de son système de codage de canal de transport SCCT, comme illustré sur les figures 1 et 3, soit dans un équipement de gestion du réseau couplé à un ou plusieurs Node Bs, comme par exemple dans le système de gestion du réseau ou NMS (pour « Network Management System »). Dans ce cas, le dispositif D est agencé de manière à déterminer la taille de la mémoire virtuelle MTV conformément à l'invention, soit de sa propre initiative, soit à la demande du réseau.

On peut également envisager que le dispositif de gestion D soit configuré de façon à imposer au système d'organisation de débit SOD d'utiliser un nombre de bits intermédiaires fixé, par exemple par le réseau. Un tel dispositif D ne fait donc que fournir au système d'organisation de débit SOD une valeur, qu'il a lui même reçue ou pour laquelle il est configuré. Par conséquent, il peut être également utilisé dans le cas d'une mise en oeuvre statique.

Le dispositif de gestion D, selon l'invention, peut être réalisé sous la forme de circuits électroniques, de modules logiciels (ou informatiques), ou d'une combinaison de circuits et de logiciels. Il en va de même du système d'organisation de débit SOD et du système de codage de canal de transport SCCT.

L'invention ne se limite pas aux modes de réalisation de dispositif de gestion D, de système d'organisation de débit SOD, et de système de codage de canal de transport SCCT décrits ci-avant, seulement à titre d'exemple, mais elle englobe toutes les variantes que pourra envisager l'homme de l'art dans le cadre des revendications ci-après.

## Revendications

1. Dispositif (D) de gestion de taille de mémoire pour un système (SOD) d'organisation de débit de transmission de blocs de bits de données dans un ensemble d'au moins un canal physique de type HS-PDSCH associé à un canal de transport descendant de type HS-DSCH et établi entre une station de base (Node B) d'un réseau de communications et au moins un équipement d'utilisateur (UE), ledit système (SOD) comprenant i) un premier étage d'organisation de débit (FRM) pour adapter un nombre de bits d'entrée provenant dudit canal de transport HS-DSCH, d'un bloc à transmettre audit équipement (UE), à un nombre choisi de bits intermédiaires, ii) une mémoire virtuelle (MTV) pouvant stocker ledit nombre choisi de bits intermédiaires, jusqu'à réception par ladite station de base (Node B) d'un accusé de réception signalant la réception correcte dudit bloc par ledit équipement (UE) dans le cadre d'une procédure de type « HARQ », et iii) un second étage d'organisation de débit (SRM) pour adapter ledit nombre choisi de bits intermédiaires à un nombre de bits de sortie égal au nombre maximal de bits pouvant être transmis par ledit ensemble, dans un intervalle de temps donné, **caractérisé en ce qu'**il est agencé pour fournir un nombre de bits intermédiaires choisi de sorte que ledit premier étage (FRM) puisse adapter ledit nombre de bits d'entrée au nombre de bits intermédiaires, et que ledit second étage (SRM) puisse adapter ledit nombre de bits intermédiaires au nombre de bits de sortie pouvant être transmis par ledit ensemble associé audit canal de transport HS-DSCH, sans ajout de bits, et.
**en ce qu'**il est agencé pour fournir un nombre de bits intermédiaires au moins égal à une valeur minimale, Sₘᵢₙ, égale au nombre maximal de bits pouvant être transmis par ledit ensemble.

2. Dispositif selon la revendication 1, **caractérisé en ce qu'**il est agencé pour fournir un nombre de bits intermédiaires au moins égal à une autre valeur, Sₒₚₜ, strictement supérieure à ladite valeur minimale, Sₘᵢₙ.

3. Dispositif selon la revendication 2, **caractérisé en ce que** ladite autre valeur, Sₒₚₜ, est égale audit nombre de bits d'entrée provenant du canal de transport HS-DSCH à l'entrée dudit premier étage (FRM).

4. Dispositif selon la revendication 3, **caractérisé en ce que** ledit nombre de bits d'entrée est égal à la somme du résultat de la multiplication par six d'un débit de bits d'informations utiles (R), en kilobits par seconde, que peut recevoir ledit équipement (UE) et d'une constante choisie.

5. Dispositif selon la revendication 4, **caractérisé en ce que** ladite constante est égale à 84.

6. Dispositif selon l'une des revendications 1 à 5, **caractérisé en ce qu'**il est agencé pour déterminer ledit nombre de bits intermédiaires.

7. Système (SOD) d'organisation de débit de transmission de blocs de bits de données dans un ensemble d'au moins un canal physique de type HS-PDSCH associé à un canal de transport descendant de type HS-DSCH et établi entre une station de base (Node B) d'un réseau de communications et au moins un équipement d'utilisateur (UE), comprenant i) un premier étage d'organisation de débit (FRM) pour adapter un nombre de bits d'entrée provenant dudit canal de transport HS-DSCH, d'un bloc à transmettre audit équipement (UE), à un nombre choisi de bits intermédiaires, ii) une mémoire virtuelle (MTV) pouvant stocker ledit nombre choisi de bits intermédiaires, jusqu'à réception par ladite station de base (Node B) d'un accusé de réception signalant la réception correcte dudit bloc par ledit équipement (UE) dans le cadre d'une procédure de type « HARQ », et iii) un second étage d'organisation de débit (SRM) pour adapter ledit nombre choisi de bits intermédiaires à un nombre de bits de sortie égal au nombre maximal de bits pouvant être transmis par ledit ensemble, dans un intervalle de temps donné, **caractérisé en ce qu'**il comprend un dispositif de gestion (D) selon l'une des revendications précédentes.

8. Système de codage de canal de transport (SCCT) pour un réseau de communications, **caractérisé en ce qu'**il comprend un système (SOD) d'organisation de débit de transmission de blocs de bits de données selon la revendication 7.

9. Système de codage de canal de transport (SCCT) pour un réseau de communications, **caractérisé ce qu'**il comprend un disposif de gestion (D) selon l'une des revendication 1 à 6.

## Claims

1. Buffer size management apparatus (D) for a rate matching system (SOD) for matching the transmission bit rate of blocks of data bits in a set of HS-PDSCH physical channels comprising one or more HS-PDSCH physical channels associated with an HS-DSCH downlink transport channel and set up between a base station (Node B) of a communications network and one or more user equipments (UE), said rate matching system (SOD) comprising: i) a first rate matching stage (FRM) for matching the number of input bits coming from said HS-DSCH transport channel of a block to be transmitted to said equipment (UE) to a selected number of intermediate bits, ii) a virtual buffer (MTV) able to store the selected number of intermediate bits until reception by said base station (Node B) of an acknowledgement indicating correct reception of said block by said equipment (UE) in the context of an HARQ procedure, and iii) a second rate matching stage (SRM) for matching the selected number of intermediate bits to a number of output bits equal to the maximum number of bits that can be transmitted by said set in a given time interval, which management apparatus is **characterized in that** it is adapted to supply a selected number of intermediate bits such that said first stage (FRM) is able to match said number of input bits to the number of intermediate bits and said second stage (SRM) is able to match said number of intermediate bits to the number of output bits that can be transmitted by said set associated with said HS-DSCH transport channel without adding any bits, and
**in that** it is adapted to supply a number of intermediate bits at least equal to a minimum value, Sₘᵢₙ, equal to the maximum number of bits that can be transmitted by said set.

2. Apparatus according to claim 1, **characterized in that** it is adapted to supply a number of intermediate bits at least equal to another value, Sₒₚₜ, greater than said minimum value, Sₘᵢₙ.

3. Apparatus according to claim 2, **characterized in that** said other value, Sₒₚₜ, is equal to said number of input bits at the input of said first stage (FRM) coming from the HS-DSCH transport channel.

4. Apparatus according to claim 3, **characterized in that** said number of input bits is equal to the sum of a selected constant and six times a payload information bit rate (R) in kilobits per second that said equipment (UE) is able to receive.

5. Apparatus according to claim 4, **characterized in that** said constant is equal to 84.

6. Apparatus according to any one of claims 1 to 5, **characterized in that** it is adapted to determine said number of intermediate bits.

7. A rate matching system (SOD) for matching the transmission bit rate of blocks of data bits in a set of HS-PDSCH physical channels comprising one or more HS-PDSCH physical channels associated with an HS-DSCH downlink transport channel and set up between a base station (Node B) of a communications network and one or more user equipments (UE), said rate matching system (SOD) comprising: i) a first rate matching stage (FRM) for matching the number of input bits coming from said HS-DSCH transport channel of a block to be transmitted to said equipment (UE) to a selected number of intermediate bits, ii) a virtual buffer (MTV) able to store the selected number of intermediate bits until reception by said base station (Node B) in the context of an HARQ procedure of an acknowledgement indicating correct reception of said block by said equipment (UE), and iii) a second rate matching stage (SRM) for matching the selected number of intermediate bits to a number of output bits equal to the maximum number of bits that can be transmitted by said set in a given time interval, which rate matching system is **characterized in that** it includes management apparatus (D) according to any one of the preceding claims.

8. A transport channel coding system (SCCT) for a communications network, **characterized in that** it includes a rate matching system (SOD) according to claim 7 for organizing the transmission bit rate of blocks of data bits.

9. A transport channel coding system (SCCT) for a communications network, **characterized in that** it includes management apparatus (D) according to any one of claims 1 to 6.

## Patentansprüche

1. Vorrichtung (D) zur Verwaltung der Speichergröße für ein System zur Organisation der Übertragung (SOD) von Datenbitblöcken in einer Baugruppe, welche mindestens aus einem physikalischen HS-PDSCH-Kanal in Verbindung mit einem Downlink-Transportkanal besteht und zwischen einer Basisstation (Node B) eines Kommunikationsnetzes und mindestens einer Benutzerausrüstung (UE) eingerichtet ist, wobei das System (SOD) umfasst: i) eine erste Ebene (FRM) zur Organisation der Übertragung, um eine Anzahl von von dem besagten HS-DSCH-Transportkanal kommende Eingangsbits eines an die besagte Ausrüstung (UE) zu übertragenden Blocks an eine gewählte Anzahl von Zwischenbits anzupassen, ii) einen virtuellen Speicher (MTV), welcher fähig ist, die besagte gewählte Anzahl von Zwischenbits so lange zu speichern, bis die besagte Basisstation (Node B) eine Empfangsbestätigung für den korrekten Empfang des besagten Blocks durch die besagte Ausrüstung (UE) im Rahmen eines "HARQ"-Prozesses erhält, und iii) eine zweite Ebene (SRM) zur Organisation der Übertragung, um die besagte gewählte Anzahl von Zwischenbits an eine Anzahl von Ausgangsbits, welche gleich der maximalen Anzahl von Bits ist, die von der besagten Baugruppe innerhalb eines gegebenen Zeitintervalls übertragen werden können, anzupassen, **dadurch gekennzeichnet, dass** sie dafür ausgelegt ist, eine Anzahl von Zwischenbits zu liefern, die so gewählt ist, dass die erste Ebene (FRM) die besagte Anzahl von Eingangsbits an die Anzahl der Zwischenbits anpassen kann, und dass die besagte zweite Ebene (SRM) die besagte Anzahl von Zwischenbits an die Anzahl der Ausgangsbits, welche von der besagten Baugruppe in Verbindung mit dem besagten HS-DSCH-Transportkanal übertragen werden kann, ohne Hinzufügen von Bits anpassen kann, und
**dadurch**, dass sie dafür ausgelegt ist, eine Anzahl von Zwischenbits zu liefern, welche mindestens gleich einem Minimalwert, Sₘᵢₙ, ist, der der maximalen Anzahl von Bits entspricht, die von der besagten Baugruppe übertragen werden kann.

2. Vorrichtung nach Anspruch 1, **dadurch gekennzeichnet, dass** sie dafür ausgelegt ist, eine Anzahl von Zwischenbits zu liefern, welche mindestens gleich einem anderen Wert, Sₒₚₜ, also unbedingt höher als der besagte Mindestwert, Sₘᵢₙ, ist.

3. Vorrichtung nach Anspruch 2, **dadurch gekennzeichnet, dass** der besagte andere Wert, Sₒₚₜ, gleich der besagten Anzahl von Eingangsbits ist, welche von dem HS-DSCH-Transportkanal am Eingang der besagten ersten Ebene (FRM) ankommen.

4. Vorrichtung nach Anspruch 3, **dadurch gekennzeichnet, dass** die besagte Anzahl von Eingangsbits gleich der Summe des Ergebnisses der Multiplikation mit sechs einer Übertragungsrate von Nutzinformationsbits (R), in Kilobits pro Sekunde, weiche von der besagten Ausrüstung (UE) empfangen werden können, und einer gewählten Konstante ist.

5. Vorrichtung nach Anspruch 4, **dadurch gekennzeichnet, dass** die besagte Konstante gleich 84 ist.

6. Vorrichtung nach einem der Ansprüche 1 bis 5, **dadurch gekennzeichnet, dass** sie dafür ausgelegt ist, die besagte Anzahl von Zwischenhits zu ermitteln.

7. System zur Organisation der Übertragung (SOD) von Datenbitblöcken in einer Baugruppe, Welche mindestens aus einem physikalischen HS-DSCH-Kanal in Verbindung mit einem Downlink-Transportkanal besteht und zwischen einer Basisstation (Node B) eines Kommunikationsnetzes und mindestens einer Benutzerausrustung (UE) eingerichtet ist, wobei das System (SOD) umfasst: i) eine erste Ebene (FRM) zur Organisation der Übertragung, um eine Anzahl von von dem besagten HS-DSCH-Transportkanal kommende Eingangsbits eines an die besagte Ausrüstung (UE) zu übertragenden Blocks an eine gewählte Anzahl von Zwischenbits anzupassen, ii) einen virtuellen Speicher (MTV), welcher fähig ist, die besagte gewählte Anzahl von Zwischenbits so lange zu speichern, bis die besagte Basisstation (Node B) eine Empfangsbestätigung für den korrekten Empfang des besagten Blocks durch die besagte Ausrüstung (UE) im Rahmen eines "HARQ"-Prozesses erhält, und iii) eine zweite Ebene (SRM) zur Organisation der Übertragung, um die besagte gewähr Anzahl von Zwischenbits an eine Anzahl von Ausgangsbits, welche gleich der maximalen Anzahl von Bits ist, die von der besagten Baugruppe innerhalb eines gegebenen Zeitintervalls übertragen werden können, anzupassen, **dadurch gekennzeichnet, dass** sie eine Verwaltungsvorrichtung (D) nach einem der vorstehenden Ansprüche umfasst.

8. System zur Codierung des Transportkanals (SCCT) für ein Kommunikationsnetz, **dadurch gekennzeichnet, dass** es ein System zur Organisation der Übertragung (SOD) von Datenbitblöcken nach Anspruch 7 umfasst.

9. System zur Codierung des Transportkanals (SCCT) für ein Kommünikationsnetz, **dadurch gekennzeichnet, dass** es eine Vorrichtung (D) zur Verwaltung nach einem der Ansprüche 1 bis 6 umfasst.
